Europäisches Patentamt

European Patent Office

Office européen des brevets

(19)

(11) Veröffentlichungsnummer: **0 133 989**
**A2**

(12) # EUROPÄISCHE PATENTANMELDUNG

(21) Anmeldenummer: **84109107.7**

(22) Anmeldetag: **01.08.84**

(51) Int. Cl.⁴: **E 04 B 1/76,** E 04 C 2/26

(30) Priorität: **03.08.83 DE 3327955**

(43) Veröffentlichungstag der Anmeldung: **13.03.85**
**Patentblatt 85/11**

(84) Benannte Vertragsstaaten: **AT BE CH DE FR GB IT LI LU NL SE**

(71) Anmelder: **Kunert, Heinz, Dr., Am Krieler Dom 23, D-5000 Köln 41 (DE)**

(72) Erfinder: **Kunert, Heinz, Dr., Am Krieler Dom 23, D-5000 Köln 41 (DE)**

(74) Vertreter: **Geitz, Heinrich, Dr.-Ing., Postfach 2708 Kaiserstrasse 156, D-7500 Karlsruhe 1 (DE)**

(54) **Bauelement, insbesondere plattenförmiges Wandelement.**

(57) Durch eine Dämmschicht des Elements erstreckt sich wenigstens ein für den Bereich des solaren Spektrums transparentes Einstrahlfenster hindurch. Auf der zur Einstrahlseite hinweisenden Seite des Einstrahlfensters kann ein strahlenverdichtendes Eingangselement in Form einer Strahlenkonzentrationskammer eines Linsensystems, eines parabolischen Konzentrators oder eines hyperbolischen Spiegelsystems vorgesehen sein. Innerhalb des Einstrahlfensters ist zweckmäßigerweise ein für einfallende Solarstrahlung transparentes, hingegen für langwellige Wärmestrahlung sperrendes Solarstrahlungsventil angeordnet, bei dem es sich um einen hochevakuierten Glashohlkörper handeln kann.

0133989

842247

Anmelder: Kunert, Heinz, Dr.
Am Krieler Dom 23

DE-5000 Köln 41

Bauelement, insbesondere plattenförmiges Wandelement
=======================================================

Die Erfindung bezieht sich auf ein Bauelement, insbesondere ein plattenförmiges Wandelement, mit einer
eine vorbestimmte Dicke und einen vorbestimmten Wärmedämmwert aufweisenden Dämmschicht.

Bauelemente insbesondere flächenhafter Ausgestaltung
dieser Art sind bekannt in Form von Wärmedämmplatten,
etwa aus Polyurethan-Hartschaum, und als Glasscheiben-
Systeme mit Einfach- oder Mehrfachverglasungen. Während
die Dämmplatten allein dem Zwecke dienen, eine den
Erfordernissen entsprechende Wärmedämmung sicherzustellen und insbesondere den Wärmeabfluß aus Bereichen
höherer Temperatur in niedriger temperierte Bereiche
zu reduzieren, besteht die Zweckbestimmung von Glasscheiben-Systemen, neben der Lichtdurchlässigkeit,
auch darin, in umschlossene Räume die Einstrahlung
von Solarenergie und deren Transferierung in Wärme
zu ermöglichen, beispielsweise um den sog. "Treibhauseffekt" für die Erwärmung bzw. Klimatisierung von
umschlossenen Räumen auszunutzen.

Durch die vorliegende Erfindung soll demgegenüber ein Bauelement geschaffen werden, das geeignet ist, ein Maximum an energiereicher Solarstrahlung ,wie dies bei Glasscheiben-Systemen der Fall ist, hindurchtreten zu lassen, das aber im Vergleich zu Glasscheiben-Systemen wirksamer in der Lage ist, den Austritt der in langwellige Strahlung transferierten Solarenergie auf ein Minimum zu reduzieren. Es soll mithin erfindungsgemäß ein insbesondere plattenförmiges Element geschaffen werden, das in weit wirksamer Weise, als dies bei bekannten Glasscheiben-Systemen der Fall ist, die Nutzung des sog. "Treibhauseffektes" für die Erwärmung bzw. Klimatisierung von Wandflächen und/oder geschlossenen Räumen ermöglicht.

Diese Aufgabe ist bei einem Bauelement gemäß Oberbegriff des Patentanspruchs 1 dadurch gelöst, daß sich wenigstens ein für den Bereich des Solarspektrums transparentes Einstrahlfenster durch das Element hindurcherstreckt.

Die erfindungsgemäße Aufgabenlösung besteht mithin in der Schaffung eines Bauelementes, das bei großer Wärmedämmung einen hohen Einstrahlungsfaktor für die Solarstrahlung aufweist, bei dem aber angesichts der im Verhältnis zur Elementfläche nur begrenzte Querschnitte aufweisenden Einstrahlfenster für den Bereich des Solarspektrum die Rückstrahlung von transferierter Wärmestrahlung auf ein Minimum reduziert ist.

Bei entsprechender Ausgestaltung kann das erfindungsgemäße Bauelement beispielsweise als Vorhangfassade einer Außenwand sowie als Abdeckfläche für Flach- oder Steildächer Verwendung finden, aber auch als wandbildendes Element, etwa bei Industrie- oder Sporthallen, und schließlich auch als Abdeckfläche von
Sonnenkollektoren.

Nach einer Ausgestaltung der Erfindung kann das Einstrahlfenster ein sich im wesentlichen senkrecht
zu der nach außen, zur Einstrahlseite hinweisenden
Oberfläche des Elements erstreckender, letzteres
durchbrechender Kanal sein, der kreisförmigen Querschnitt
aufweisen oder auch als langgestreckter Rechteckkanal
mit großer Längenerstreckung im Verhältnis zu seiner
Breite ausgebildet sein kann. Ferner können,nach
einem anderen Ausgestaltungsmerkmal, die Oberflächen
des Einstrahlfensters mit Vorteil reflektierend ausgebildet bzw. mit einem reflektierenden Material belegt
sein.

Eine weitere Ausgestaltung sieht vor, daß das Einstrahlfenster, das als sich durch das Element hindurcherstreckender Kanal ausgebildet sein kann, mit unterschiedlichen Querschnitten auf beiden Elementseiten
ausmündet. Dabei hat es sich als vorteilhaft erwiesen,
wenn die größeren Querschnitt aufweisende Ausmündung
des Einstrahlfensters während der Heizperiode nach
außen weist und mithin der solaren Strahlungsquelle
zugewandt ist. Das Element kann somit auch als Wendeelement ausgebildet sein.

Zweckmäßigerweise ist auf der nach außen zur Einstrahlseite hinweisenden Seite des Elements eine
das Einstrahlfenster überdeckende Scheibe aus transparentem Material angeordnet, die innenseitig mit
einer an sich bekannten, selektiv im ferneren IR-Bereich reflektierenden Beschichtung versehen sein kann. Durch das Einstrahlfenster einstrahlende Solarstrahlung tritt durch die genannte Abdeckscheibe und das Einstrahlfenster hindurch und wird auf der anderen Elementseite, die beispielsweise einem umschlossenen Raum zugewandt sein kann, in langwellige Wärmestrahlung transferiert. Diese langwellige Wärmestrahlung wird im wesentlichen durch die großflächigen Anteile der Dämmschicht aufgefangen, kann aber auch nicht durch den das Einstrahlfenster bildenden Kanal zurückstrahlen, wenn die den Kanal einstrahlseitig überdeckende Scheibe, die aus Glas oder Kunststoff bestehen kann, mit einer selektiv im ferneren IR-Bereich reflektierenden Beschichtung versehen ist.

Eine Erhöhung des Wärmeenergiegewinns ist darüber hinaus zu erreichen, wenn sich quer durch den Querschnitt des Einstrahlfensters wenigstens eine selektiv im fernen IR-Bereich reflektierende Schicht hindurcherstreckt, die auf einer quer zu dem die Dämmschicht durchbrechenden Einstrahlfenster verlaufenden Glas- oder Kunststoffscheibe angeordnet sein kann.

Eine besonders wichtige Ausgestaltung der Erfindung besteht darin, daß auf der nach außen, zur Einstrahlseite hinweisenden Elementseite des Einstrahlfensters ein einfallende Solarstrahlung verdichtendes Eingangselement angeordnet ist. Bei diesem Eingangselement kann es sich um eine sich von der zur solaren Strahlungsquelle hinweisenden Außenseite zu einem Öffnungsfeld hin verengende Strahlenkonzentrationskammer handeln und an das genannte Öffnungsfeld kann sich ein auf der von der Einstrahlseite abgewandten Seite des Bauelements ausmündender Strahlenleitkanal anschließen.

Direkt auf die zur Einstrahlseite hinweisende Elementoberfläche oder diffus einfallende Sonnenstrahlung
wird mittels eines derartigen Eingangselementes gebündelt und tritt mit hoher Energiedichte durch das
im Vergleich zur Flächenausdehnung des Bauelements
eng dimensionierte Einstrahlfenster hindurch, um
mittels hinter dem Bauelement angeordneter Absorptionsmedien in Wärmestrahlung transferiert zu werden.

Bei einer vorteilhaften Ausgestaltung ist das strahlenverdichtende Eingangselement ein Linsensystem , dessen
Brennpunkt im Eintrittsfeld des Einstrahlfensters
in letzterem liegt. Insbesondere kann es sich bei
dem das Eingangselement bildenden Linsensystem um
eine Fresnel-Linse handeln, beispielsweise um eine
solche, die als dünnwandige Scheibe ausgebildet und
mit der Unterseite der einstrahlseitig das Einstrahlfenster abdeckenden Scheibe verklebt ist.

Anstelle eines Linsensystems in Form einer Fresnel-Linse
kann selbstverständlich auch eine holographische
Linse Verwendung finden und die Wandflächen einer
sich auf ein Öffnungsfenster des Einstrahlfensters
verengenden Strahlenkonzentrationskammer können mit
einer solare Einstrahlung absorbierenden Schicht belegt
sein, so daß nicht in die Kanalöffnung fokussierte
Einstrahlung, die auf die Wandflächen fällt, absorbiert
und als langwellige Wärmestrahlung wieder emittiert
und nach dem Prinzip einer Ulbricht-Kugel über die
IR-Reflexschichten einer Einstrahl-Abdeckscheibe
in die Kanalöffnung geleitet wird.

Nach einem anderen ausgestaltenden Merkmal der Erfindung
kann das strahlenverdichtende Eingangselement aber
auch ein nicht fokussierender parabolischer Konzentrator
sein, dessen parabolische Strahlenleitkammer im Öffnungsfeld des sich durch das Element hindurcherstreckenden
Einstrahlfensters erstreckt. Die Wandflächen eines
derartigen Systems sind zweckmäßigerweise substantiell reflektierend ausgebildet. Diese parabolische
Strahlenleitkammer kann eine solche geometrische
Gestaltung haben, daß der Winkelbereich, in dem einfallende Solarstrahlen eine Konzentration auf das Öffnungsfeld des Einstrahlfensters erfahren, limitiert ist,
etwa dergestalt, daß unter Maximierung des Konzentrationswertes die in den Sommermonaten unter einem
Höhenwinkel zwischen etwa 55° und 70° einfallende
Solarstrahlung zu keiner Konzentration auf das Eintrittsfeld des Einstrahlfensters führt, sondern der
Einstrahlung entgegengerichtet zurückgestrahlt wird.

Bei einer nochmals anderen Ausgestaltung ist das
strahlenverdichtende Eingangselement ein hyperbolisches
Konvex-Spiegelsystem mit fokussierender Wirkung,
bei dem um das Öffnungsfeld des Einstrahlfensters
herum auf einen Brennpunkt ausgerichtete Spiegelflächen
angeordnet sind und sich im Brennpunkt dieser Spiegelflächen eine auf das genannte Öffnungsfeld ausgerichtete Spiegelfläche befindet, die den gebündelten
Energiestrom hoher Dichte in das Öffnungsfeld des
Einstrahlfensters reflektiert.Zweckmäßigerweise ist
der Brennpunkt der um das Öffnungsfeld herum angeordneten Spiegelflächen etwa im Bereich der Unterseite der das Einstrahlfenster einstrahlseitig überdeckenden Scheibe aus transparentem Material anzuordnen. Die sich um das Öffnungsfeld herumerstreckenden Spiegelflächen und die in deren Brennpunkt liegende Spiegelfläche können zweckmäßigerweise in einem Profilkörper angeordnet sein.

Eine außerordentlich positive Wärmebilanz kann erreicht werden, wenn in weiterer Ausgestaltung der Erfindung im Einstrahlfenster sich ein dessen Querschnitt ausfüllendes Solarstrahlungsventil erstreckt, das für einfallende Solarstrahlung transparent ist, hingegen für langwellige Wärmestrahlung sperrend wirkt. Bei einer derartigen Ausgestaltung kann der durch das Einstrahlfenster in beispielsweise einen Raum einfallende fokussierte, solare Lichstrom hoher Energiedichte raumseitig optimal genutzt werden, da dem gegenläufigen Wärmestrom im Falle geringerer Außentemperaturen sowohl bezüglich Wärmestrahlung als auch -leitung und Konvexion hohe Widerstandswerte entgegenstehen.

Eine besonders vorteilhafte und einfache Ausbildung eines derartigen Solarstrahlungsventils besteht in der Verwendung eines der Querschnittsform des sich durch das Element hindurcherstreckenden Einstrahlfensters angepaßten hochevakuierten dünnwandigen Glaskörpers.Dieser Glaskörper kann zweckmäßigerweise eine einstrahlseitig angeordnete Strahlenkonzentrationskammer des Einstrahlfensters sein. Eine Ausgestaltung sieht vor, daß einstrahlseitig innerhalb des Glaskörpers eine Sammellinse als einfallende Solarstrahlung verdichtendes Element angeordnet ist. Bei dieser Sammellinse kann es sich um eine Kunststofflinse handeln,
die durch Einbringen flüssigen Kunststoffs in den
Glaskörper und nachfolgendes Aushärten der Kunststoffmasse erzeugt ist. Nach einer anderen Ausgestaltung
erstreckt der Glaskörper mit Vorteil in der Nähe
des Öffnungsfeldes zwischen einer einstrahlseitig
angeordneten Strahlenkonzentrationskammer und einem
auf der von der Einstrahlseite abgewandten Elementseite ausmündenden Strahlenleitkanal quer durch das
Einstrahlfenster .

Wenn das Einstrahlfenster kreisförmigen oder beispielsweise auch quadratischen Querschnitt aufweist, kann
der das Solarstrahlungsventil bildende Glaskörper
zweckmäßig ein evakuierter Hohlkörper sein, insbesondere ein kugelförmiger oder ovaler Hohlkörper.
Bei spaltförmiger Gestaltung des Einstrahlfensters
ist es hingegen zweckmäßig, als Solarstrahlungsventil
eine hochevakuierte Glasröhre zu verwenden.

Wenn nach einem weiteren wichtigen Ausgestaltungsmerkmal der Erfindung der das Solarstrahlungsventil
bildende Glaskörper um eine etwa parallel zur Elementaußenfläche verlaufende Achse drehbar im Einstrahlfenster aufgenommen und über einen Teil seines Umfangs
im Umkreis des Öffnungsfeldes des Einstrahlfensters
mit einer im solaren Spektralbereich reflektierenden,
wahlweise infolge Drehung des Glaskörpers auf der
Strahleneintritts- oder -austrittsseite positionierbaren Beschichtung versehen ist, gelingt in einfacher
Weise eine generelle Steuerung des Energiestroms.
Wenn der Durchtritt der solaren Strahlung, beispielsweise in den Sommermonaten, unerwünscht ist, wird der Glaskörper so um seine Achse gedreht, daß der beschichtete
Teil die Eintritts- oder Austrittsöffnung des Einstrahlfensters ausfüllt und die solare Einstrahlung dann
in Richtung der Einstrahlung reflektiert wird, ohne
in das Einstrahlfenster bzw. einen Lichtleitkanal
des Einstrahlfensters einzutreten.

Eine andere Steuerungsmöglichkeit des Wärmestroms
besteht bei der Verwendung von Sammellinsen als strahlenverdichtende Eingangselemente darin, den Linsenkörper
durch geeignete mechanische Einrichtungen zu dejustieren,
also in seiner Ebene zu verschieben oder um eine
Drehachse zu neigen, um so eine Brennpunktverlagerung
herbeizuführen. Auch bei derartigen fokussierenden
Konzentratoren tritt dann das fokussierte Strahlenbündel nicht durch das Einstrahlfenster hindurch
bzw. in einen sich durch die Dämmschicht hindurcherstreckenden Strahlenleitkanal des Einstrahlfensters
ein.

Eine andere wichtige Ausgestaltung der Erfindung
besteht darin, daß auf der von der Einstrahlseite
entfernten Seite des das Solarstrahlungsventil bildenden Glaskörpers sich ein im Bereich des solaren Spektrums
transparentes, ein absorbierendes Fluid aufnehmendes
bzw. leitendes Rohr durch den das Einstrahlfenster
bildenden spaltförmigen Kanal hindurcherstreckt.
Es handelt sich mithin bei dieser Ausgestaltung um
die Ausbildung eines Elements mit der zusätzlichen
Funktion als Solarkollektor. Wenn im Einstrahlfenster
bzw. einem Strahlenleitkanal des Einstrahlfensters rauminnenseitig von dem das Fluid aufnehmenden Rohr
noch ein fixes Dämmelement, etwa in Form eines hochevakuierten, dünnwandigen Glaszylinders, angeordnet
wird, führt dies zu einem solaren Hochleistungs-Kollektor.

Ein anderes Ausgestaltungsmerkmal der Erfindung besteht
darin, daß auf der von der Einstrahlseite entfernten
Elementseite eine das Einstrahlfenster überdeckende
Abdeckplatte angeordnet ist. Wenn diese Abdeckplatte
aus transparentem Material besteht, findet ein im
wesentlichen unbehinderter Lichteinfall durch das
Einstrahlfenster hindurch statt. Zweckmäßigerweise
kann jedoch die innenseitige Abdeckplatte auch eine
lichtstreuende Glasscheibe oder eine Stegdoppelplatte
aus transparentem Kunststoff sein. Anstelle einer
derartigen Abdeckplatte kann auf der von der Einstrahlseite entfernten Elementseite auch eine das Einstrahlfenster überdeckende Absorptionsschicht angeordnet
sein, mittels der durch das Einstrahlfenster einfallende Solarstrahlung hoher Energiedichte in langwellige
Wärmestrahlung transferiert wird. Bei der Absorptionsschicht kann es sich mit Vorteil um eine Scheibe
mit einer "Low-Emissiv-Schicht auf der Innenseite
handeln.

Bei flächenhafter Ausbildung des Bauelements hat
es sich als zweckmäßig erwiesen, wenn über die Fläche
verteilt und jeweils im Abstand voneinander eine
Vielzahl Einstrahlfenster vorgesehen wird. Wenn
gemäß einer oben angegebenen Ausgestaltung der Erfindung die Einstrahlfenster mit unterschiedlichen
Querschnitten auf beiden Elementseiten ausmünden
und das Bauelement als Wendeelement ausgebildet wird,
ergibt sich der Vorteil, daß durch Drehung des Elements
um 180° in den Sommermonaten die Seite mit den kleineren Öffnungsquerschnitten der Einstrahlfenster nach außen, also zur solaren Strahlungsquelle hinweisend, eingestellt und allein dadurch eine Reduzierung des Licht- und solaren Energieeinfalls zur strahlungsabgewandten Seite des Elements erreicht werden kann.

Schließlich besteht eine weitere wichtige Ausgestaltung der Erfindung in einer transludenten Ausbildung des Bauelements mit einer Dämmschicht aus transluzentem Kunststoffmaterial, etwa in Form von Schaummaterial.

Einige Ausführungsformen der Erfindung sollen nachstehend anhand der beigefügten Zeichnung erläutert werden. In schematischen Schnittansichten zeigen:

Fig. 1  ein plattenförmiges Bauelement mit einer Hartschaumplatte aus Polyurethan als Dämmschicht, durch die sich senkrecht zur Flächenausdehnung des Elements im Abstand voneinander Einstrahlfenster mit einer einstrahlseitigen Strahlenkonzentrationskammer und einem sich daran anschließenden Strahlenleitkanal hindurcherstrecken, die mit auf der Einstrahlseite angeordneten Linsensystemen zum Verdichten einfallender Solarstrahlung versehen sind,

Fig. 2  ein Einstrahlfenster mit einem nicht fokussierenden parabolischen Konzentrator als strahlenverdichtendes Eingangselement,

Fig. 3  ein Einstrahlfenster mit einem fokussierenden Eingangselement in Form eines hyperbolisch konvexen Spiegelsystems,

Fig. 4    die Ausbildung eines Elements mit der zusätzlichen Funktion als Solarkollektor in
einer Ansicht ähnlich Fig. 1,

Fig. 5    ebenfalls in einer Ansicht ähnlich Fig. 1
die Ausbildung eines Elements als solarer
Hochleistungs-Kollektor,

Fig. 6    ein plattenförmiges Bauelement in einer Ansicht
ähnlich Fig. 1 mit einer Dämmschicht aus
transluzentem Kunststoffmaterial und sich
im Abstand voneinander durch die Dämmschicht
hindurcherstreckenden Einstrahlfenstern mit
in diesen aufgenommenen hochevakuierten Glasrohren als Solarstrahlungsventile,

Fig. 7    ein plattenförmiges Bauelement wie in Fig. 6,
jedoch evakuierten Ovalrohren als Solarstrahlungsventile, die im wesentlichen in einer Strahlenkonzentrationskammer der Einstrahlfenster
aufgenommen sind,

Fig. 8    eine Ausführungsform ähnlich fig. 7, bei
der jedoch die Strahlenkonzentrationskammern
der Einstrahlfenster in die die Solarstrahlungsventile bildenden Glasrohre integriert sind,

Fig. 9    eine Alternative zu der Ausführungsform
nach Fig. 8 und

Fig. 10 eine Alternative zu den Ausführungsformen
nach den Fig. 6 und 7.

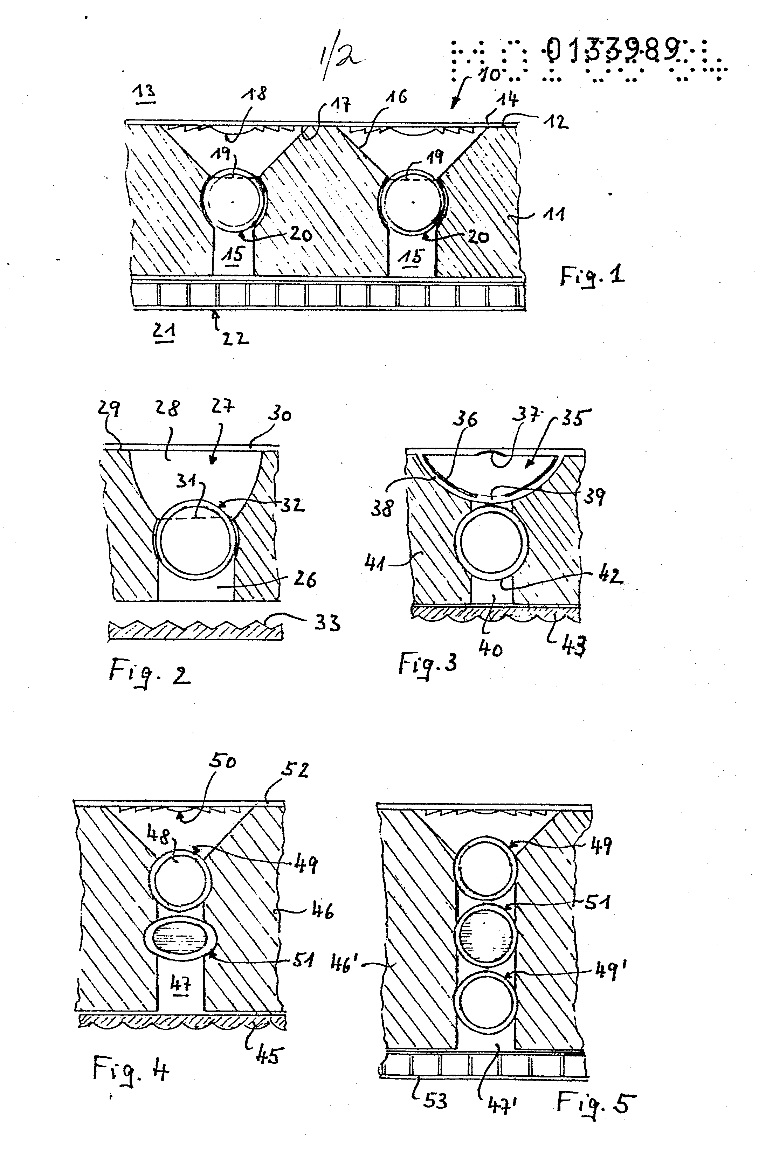

Bei dem in Fig. 1 veranschaulichten plattenförmigen Bauelement 10 besteht die Dämmschicht aus einer Polyurethan-Hartschaumplatte 11, deren Oberfläche 12 auf der nach außen, den einfallenden Solarstrahlen zugewandten Seite 13 mittels einer Glasscheibe 14 abgedeckt ist. Durch die Hartschaumplatte 11 erstrecken sich über deren Flächenausdehnung verteilt angeordnete Einstrahlfenster mit etwa senkrecht zu der nach außen weisenden Plattenoberfläche 12 verlaufenden Kanälen 15 hindurch, die im Verhältnis zur Plattenausdehnung eng bemessen sind und kreisförmige Querschnitte haben. An die Kanäle 15 des Einstrahlfensters schließen sich plattenaußenseitig trichterartige Erweiterungen 16 an, die außenseitig von einer Glasscheibe 14 überdeckt sind. Innerhalab der genannten Erweiterungen 16 sind mit der Unterseite 17 der Glasscheibe als strahlenverdichtende Eingangselemente Fresnel-Linsen 18 verklebt, bei denen es sich um kreisförmige, als flache Scheiben ausgebildete Sammellinsen handelt. Im Übergangsbereich zwischen den trichterförmigen Erweiterungen 16 und den Kanälen 15 sind im sog. Öffnungsfeld 19 der Einstrahlfenster dünnwandige hochevakuierte Glaskörper 20 angeordnet und auf der von der Einstrahlseite entfernten Elementseite 21 ist die Hartschaumplatte 11 von einer transparenten Stegdoppelplatte 22 überdeckt.

Bei dem in Fig. 1 veranschaulichten Bauelement handelt es sich um ein teiltransparentes Element, das beispielsweise als Vorhangfassade, aber auch als Wand- oder Dachelement ausgebildet sein kann. Auf der nach außen, zur Umgebung hinweisenden Elementseite einfallende
Solarstrahlung erfährt durch die Fresnel-Linsen 18,
deren Brennpunkte im oder auf der vom Öffnungsfeld 19
entfernten Seite des zugeordneten Kanals 15 liegen,
eine Bündelung und der so verdichtete Solarenergiestrom tritt durch den Glaskörper 20 hindurch in den
Kanal ein und durch diesen und die dem Element innenseitig zugeordnete lichtstreuende Stegdoppelplatte 22
hindurch auf der hinter dem Element liegenden Seite 21
aus, also beispielsweise in einen von dem Element
umschlossenen Raum ein. Um eine Absorption des Energiestroms an den Kanalwandungen und im Bereich der trichterförmigen Erweiterungen 16 zu vermeiden, können diese
mit reflektierenden Schichten versehen sein.

Die im Bereich der Öffnungsfelder 19 der Kanäle 15
angordneten hochevakuierten Glaskörper 20, bei denen
es sich im Falle der Ausführungsform nach Fig. 1
um hochevakuierte dünnwandige Glaskugeln handelt,
bilden gewissermaßen Einwegventile für einfallende
Solarstrahlung, die den im wesentlichen ungehinderten
Durchgang der einfallenden hochfrequenten Energiestrahlung ermöglichen, aber für langwellige Wärmestrahlung sperrend wirken. Auf der Elementseite 21
in langwellige Wärmestrahlung transferierte Solarstrahlung vermag mithin durch die Einstrahlfenster
nicht zurückzustrahlen und wird durch die im Vergleich
zu den Querschnitten der Einstrahlfenster großflächigen
Anteile der Hartschaumplatte 11 aufgefangen.

Eine Möglichkeit zur Steuerung des durch die Einstrahlfenster von der Elementaußenseite 13 zum Inneren
beispielsweise eines umschlossenen Raumes hindurchtretenden Energiestroms können die hochevakuierten Glaskörper 20
im Öffnungsfeld 19 der Kanäle 15 im Umkreis der Kanaleintritt- oder Austrittsöffnung mit einer im solaren
Spektralbereich reflektierenden Schicht belegt und
im übrigen drehbar gelagert sein. Wenn der Durchtritt
der solaren Strahlung beispielsweise in den Sommermoanten unterbunden werden soll, werden die Glaskörper 20
mittels einer hier nicht interessierenden und auch
nicht dargestellten Vorrichtung um ihre etwa parallel
zur Elementoberfläche verlaufenden Drehachsen so
gedreht, daß die beschichteten Glaskörperteile die
Eintritts- oder Austrittsöffnungen der Kanäle 15
ausfüllen. Die solare Einstrahlung wird dann, ohne
in den Kanal einzutreten, in Richtung der Einstrahlung
reflektiert.

Anstelle der bei der Ausführungsform nach Fig. 1
verwirklichten Einstrahlfenster mit Strahlenleitkanälen 15,
die Kreisquerschnitte aufweisen, können naturgemäß
auch andere Kanalformen Verwendung finden, beispielsweise spaltförmige Kanäle vergleichsweise geringer
Breite und großer Längenerstreckung, die dann beispielsweise in Parallellage zueinander die Dämmschicht
des Elements durchdringen. Anstelle der oben erläuterten
kreisförmigen Sammellinsen kommen dann als strahlenverdichtende Eingangselemente Stab- oder Zylinderlinsen in Betracht, desgleichen anstelle der als
Hohlkugel ausgebildeten Glaskörper evakuierte dünnwandige Glasröhren, die bei Ausrüstung mit einer
reflektierenden Teilbeschichtung im Umkreis der Öffnungsfelder dann um ihre Längsachsen in der Weise drehbar
gelagert sein können, daß die beschichteten Glaskörperflächen in eine die Eintritts- oder Austrittsöffnung

842247                              0133989

des jeweiligen Kanals ausfüllende oder freigebende
Lage kommen.

Bei der Ausführungsform nach Fig. 2 erstreckt sich
ebenfalls ein Einstrahlfenster mit einem die als
Hartschaumplatte 25 ausgebildete Dämmschicht des
Elements durchdringenden Kanal 26 durch das Element
hindurch. Anstelle der Eingangselemente in Form von
Sammellinsen bei dem Ausführungsbeispiel nach Fig. 1
ist bei der Ausgestaltung nach Fig. 2 das strahlenverdichtende Eingangselement als nicht fokussierender parabolischer Konzentrator 27 ausgebildet, dessen
Strahlenleitkammer 28 außenseitig, also auf der Einfallseite der Solarstrahlung, wiederum durch eine auf
die Oberfläche 29 der Hartschaumplatte 25 aufgebrachte
Glasscheibe 30 abgedeckt ist. Im Öffnungsfeld 31
des sich an die parabolische Strahlenleitkammer 28
anschließenden Kanals 15 ist wiederum als Solarstrahlungsventil ein dünnwandiger hochevakuierter Glaskörper 32
mit einer Teilbeschichtung seiner Oberfläche im Umfeld der Eintrittsöffnung des Kanals drehbar gelagert.
Auf der von der Einstrahlseite entfernten Seite des
Elements ist im Abstand von diesem eine die mit hoher
Energiedichte durch den Kanal einfallende Solarstrahlung
in langwellige Wärmestrahlung transferierende Absorptionsschicht 33 angeordnet. Die durch das Auftreffen der gebündelten Solarstrahlung auf die hinter
der Dämmschicht liegenden Absorptionsmedien entstehende
zurückgestrahlte Wärmestrahlung wird durch die großflächigen Anteile der Dämmschicht aufgefangen.

Die Verwendung eines nicht fokussierenden parabolischen Konzentrators 27 als strahlenverdichtendes Eingangselement hat den Vorzug, daß durch ent-

-17-

sprechende Gestaltung der parabolischen Strahlenleitkammer 28 der Winkelbereich, der zu einer Strahlenkonzentration im Öffnungsfeld 31 des Strahlenleitkanals 26 führt, zu limitieren ist. Außerhalb des
vorbestimmten Winkelbereichs auftretende Strahlung
führt dann zu einer totalen Reflexion nach außen,
wird also der Einstrahlung entgegengerichtet unverzüglich wieder aus dem Paraboloid zurückgestrahlt. Mit
Vorzug ist die Geometrie des Paraboloids in der Weise
zu gestalten, daß sie unter Maximierung des Konzentrationswertes die in den Sommermonaten unter einem
Höhenwinkel von etwa 55° bis 70° einfallende Solarstrahlung nicht mehr zu einer Abbildung oder Konzentration auf der Eintrittsfläche 31 des Kanals 26
führt, sondern zu einem Wiederaustritt aus dem Paraboloid 28.

Bei der in Fig. 3 veranschaulichten Ausführungsform
ist als Eingangselement ein hyperbolisches Konvex-
Spiegelsystem 35 mit fokussierender Wirkung eingesetzt.
Die Spiegelflächen 36, 37, die in einem einzigen
Profilkörper 38 realisiert sind, erstrecken sich
um das Öffnungsfeld 39 des Strahlenleitkanals 40
des Einstrahlfensters herum und sind auf einen achsrecht zu dem sich etwa senkrecht zur Elementoberfläche
durch die als Hartschaumplatte 41 ausgebildete Dämmschicht hindurcherstreckenden Kanal an der Unterseite
der die Dämmschicht einstrahlseitig abdeckenden Platte
liegenden Brennpunkt ausgerichtet, in dem die auf
das Öffnungsfeld des Kanals gerichtete Spiegelfläche 37
angeordnet ist.

Die auf den sich um das Öffnungsfeld 39 des Kanals 40
herumerstreckenden Spiegelflächen 36 reflektierten Solarstrahlen werden gebündelt in die im Brennpunkt
angeordnete Spiegelfläche 37 reflektiert und von
dort durch das Öffnungsfeld 39 des sich durch die
Dämmschicht hindurcherstreckenden Kanals 40 geworfen.
In der Nähe des Öffnungsfeldes ist auch in diesem
Kanal wieder ein hochevakuierter dünnwandiger Glaskörper 42
als Solarstrahlungsventil angeordnet. Auf der von
der Einstrahlseite entfernten Seite ist das Element
mit einer hier im einzelnen nicht weiter interessierenden
Absorptionsschicht 43 versehen.

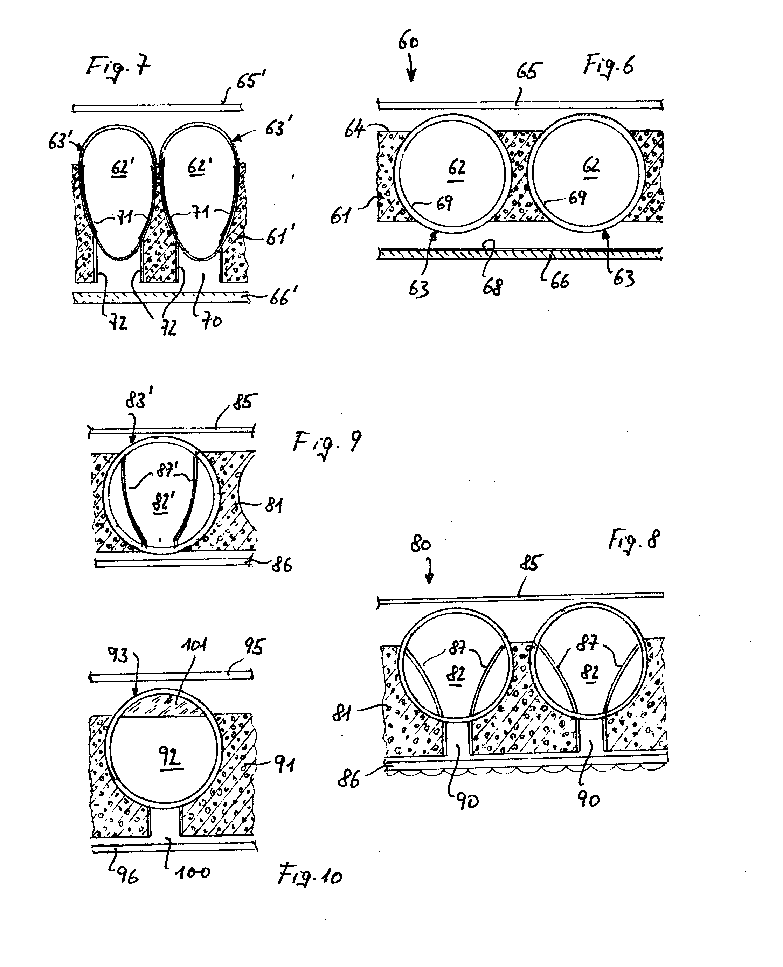

Die Ausführungsform nach Fig. 4 ist in ihrem grundsätzlichen Aufbau mit der Ausführungsform nach Fig. 1
identisch, wobei lediglich an die Stelle der lichtstreuenden Stegdoppelplatte eine Absorptionsschicht 45
getreten ist. Im Gegensatz zu der Ausführungsform
nach Fig. 1 ist der sich durch die Dämmschicht, bei
der es sich um eine Hartschaumplatte 46 handelt,
hindurcherstreckende Kanal 47 des Einstrahlfensters
in der Art eines langgestreckten Spaltes ausgebildet
und dementsprechend der im Öffnungsfeld 48 dieses
Kanals liegende hochevakuierte Glaskörper 49 als
langgestreckte Röhre. Auf der von dem auch hier als
flache Fresnel-Linse 50 ausgebildete Eingangselement
entfernten Seite des Glaskörpers 49 erstreckt sich
bei dieser Ausführungsform in Parallellage zu dem
röhrenförmigen Glaskörper im Spalt ein im Bereich
des solaren Spektrums transparentes Rohr 51, das
zur Aufnahme und Leitung eines absorbierenden Fluids
dient. Auf der Einstrahlseite überdeckt den Kanal
wiederum eine Glasscheibe 52, mit deren Unterseite
die Fresnel-Linse verklebt ist.

Diese Ausgestaltung kann als transparentes Solar-Kollektor-System mit erzwungenem Durchlauf oder als entsprechendes passives Thermo-Syphon-System betrieben werden. In Verbindung mit einer partiellen Ummantelung aus einem festen Schaumstoff, beispielsweise Polyurethan-Hartschaum, können hier auch stehende Flüssigkeitssäulen, wie Wasser oder bei niedrigen Temperaturen schmelzende Salze, als Wärmeenergiespeicher untergebracht werden. Im Falle der Verwendung von Wasser als Fluid wird die Transmission der Solarstrahlung im sichtbaren Bereich in das Innere eines von einem derartigen Element umschlossenen Raumes nicht behindert, während die Einstrahlung außerhalb des sichtbaren Bereichs mit einem Energieanteil von ca 50% vollständig absorbiert wird.

Die Ausführungsform nach Fig. 5 veranschaulicht die Weiterbildung eines derartigen Elements zu einem solaren Hochleistungs-Kollektor, bei dem die das absorbierende Fluid führende Leitung 51 zwischen zwei hochevakuierten Glaskörpern 49, 49' in Form langgestreckter Röhren aufgenommen ist. Der sich auf der von der Einstrahlseite entfernten Seite der das Fluid führenden Rohrleitung 51 erstreckende Glaskörper 49' bildet ein rauminnenseitiges fixes Dämmelement. Im übrigen ist elementinnenseitig eine lichtstreuende Stegdoppelplatte 53 angeordnet.

Bei der Ausführungsform nach Fig. 6 handelt es sich um ein plattenförmiges Bauelement 60 mit einer Dämmschicht 61, die aus transluzentem Kunststoffschaummaterial besteht, etwa einem Schaumstoff aus Acrylglas.

Durch die Dämmschicht erstrecken sich im Abstand voneinander spaltförmige Einstrahlfenster 62 hindurch, in denen als Solarstrahlungsventile hochevakuierte Glasrohre 63 aufgenommen sind. Einstrahlseitig ist die Dämmschicht mit den in den Einstrahlfenstern 62 aufgenommenen Glasrohren 63 mittels im Abstand einer sich von der Dämmschichtoberfläche 64 erstreckenden Glasscheibe 65 abgedeckt, während auf der von der Einstrahlseite entfernten Seite ebenfalls im Abstand von der entsprechenden Oberfläche der Dämmschicht eine Scheibe 66 aus Absorptionsglas angeordnet ist. Jeweils auf den zur Dämmschicht 61 hinweisenden Seiten sind die Scheiben 65, 66 mit hier im einzelnen nicht weiter interessierenden Selektivbeschichtungen 67, 68 versehen. In entsprechender Weise sind die Glasrohre 63 innenseitig mit einer Selektivbeschichtung 69 ausgerüstet.

Die Ausführungsform nach Fig. 7 unterscheidet sich von dem Bauelement nach Fig. 6 zunächst dadurch, daß in den Einstrahlfenstern 62' hochevakuierte Ovalrohre 63' aufgenommen sind und die Einstrahlfenster im Bereich der als Solarstrahlungsventile wirkenden Ovalrohre als Strahlenkonzentrationskammern ausgebildet sind, an die sich auf der von der Einstrahlseite entfernten Seite der Dämmschicht 61' ausmündende Strahlenleitkanäle 70 anschließen. Angesichts der Ausbildung der Solarstrahlungsventile als Ovalrohre und der sich an die Strahlenkonzentrationskammern der Einstrahlfenster anschließenden Strahlenleitkanäle 70 besitzt die Dömmschicht 61' eine größere Dicke als die Dämmschicht 61 des Ausführungsbeispiels nach Fig. 6, was naturgemäß zu einer merklichen Erhöhung

-21-

der Wärmedämmfähigkeit führt. Im übrigen erstreckt sich einstrahlseitig im Abstand von der Dämmschicht und den evakuierten Ovalrohren eine die Einstrahlfenster einstrahlseitig abdeckende Glasscheibe 65' und in Übereinstimmung mit der Ausbildung nach Fig. 6 ist auf der von der Einstrahlseite entfernten Seite der Dämmschicht eine letztere abdeckende Scheibe aus Absorptionsglas 66' angeordnet, die auf der zur Dämmschicht hinweisenden Seite mit einer hier nicht weiter interessierenden Selektivbeschichtung versehen ist.

Es sei besonders darauf hingewiesen, daß in Analogie zu der Ausführungsform nach Fig. 2 die Strahlenkonzentrationskammern der Einstrahlfenster 62' als parabolische, nicht fokussierende Konzentratoren ausgebildet und die Innenseiten der Ovalrohre im Bereich der parabolisch ausgebildeten Strahlenkonzentrationskammern sowie die Wandungen der Strahlenleitkanäle 70 mit spiegelnden Beschichtungen 71, 72 belegt sind. Derartig Konzentratoren haben je nach Ausbildung einen definierten Akzeptanzwinkelbereich, so daß einfallende Licht- oder Wärmestrahlen nur in einem Winkelbereich zwischen senkrechtem Strahlungseinfall bis zu einem vorbestimmten Grenzwinkel nach einmaliger Reflexion an den parabolischen Wänden durch die verspiegelte Kammer hindurch geleitet werden. Einfallende Strahlen außerhalb des Akzeptanzwinkelbereichs werden hingegen nach Zwei - oder Mehrfachreflexion an den Wandflächen wieder zur Strahlungsquelle, also zur Einstrahlseite hin, zurückgeworfen. Angesichts dieser Eigenschaft sind parabolische, nicht fokussierende Konzentratoren insbesondere geeignet, bei senkrecht stehenden Wandelementen nur die direkte Sonneneinstrahlung beispielsweise in einem Winkelbereich bis zu 30° von der Horizontalen durchtreten zu lassen.

Bei dem plattenförmigen Bauelement 80 gemäß Fig. 8
sind die Strahlenkonzentrationskammern der sich durch
die Dämmschicht 81 im Abstand voneinander hindurcherstreckenden Einstrahlfenster 82 in die in letzteren
aufgenommenen evakuierten Glasrohre 83 integriert.
Zur Ausbildung der Strahlenkonzentrationskammern
sind in die Glasrohre entsprechend parabolisch vorgeformte und verspiegelte Wandteile 87. eingelegt.
Jeweils an die Strahlenkonzentrationskammer eines
jeden Einstrahlfensters 82 schließt sich ein Strahlenleitkanal
90 an, der auf der von der Einstrahlseite entfernten
Seite der Dämmschicht 81 ausmündet. Wie bei den Ausführungsbeispielen nach den Fig. 2 bis 4 und 6, 7 ist die
von der Einstrahlseite abgewandte Seite der Dämmschicht
81 mittels einer absorbierenden Schicht 86 abgedeckt
und einstrahlseitig erstreckt sich im Abstand von
der Dämmschicht und den im Bereich der Einstrahlfenster
aufgenommenen Glasrohren eine letztere abdeckende
Scheibe 85.

Die Ausführungsform nach Fig. 9 unterscheidet sich
von der Ausführungsform nach Fig. 8 nur dadurch,
daß die Dämmschicht 81' geringere Dicke als die Dämmschicht 81 aufweist und die als Solarstrahlungsventile
wirkenden evakuierten Glasrohre 83' sich im wesentlichen
über die gesamte Dicke der Dämmschicht erstrecken.
Demgemäß schließt sich an die Einstrahlfenster 82'
bei dieser Ausführungsform kein Strahlenleitkanal
an. Zur Ausbildung von Strahlenkonzentrationskammern sind wiederum verspiegelte parabolische Wandteile 87'
in die Glasrohre eingefügt. Ebenfalls in Übereinstimmung
mit der Ausführungsform nach Fig. 8 erstrecken sich
beidseitig der Dämmschicht 81' Scheiben 85', 86'.

Bei der Ausführungsform nach Fig. 10 ist wiederum
innerhalb eines sich durch die Dämmschicht 91 hindurcherstreckenden Einstrahlfensters 92 mit einem auf
der von der Einstrahlseite entfernten Seite der Dämmschicht ausmündenden Strahlenleitkanal 100 als Solarstrahlungsventil ein evakuiertes Glasrohr 93 aufgenommen und die Dämmschicht ist einstrahl- und rückseitig mittels im Abstand von der jeweiligen Dämmschichtoberfläche verlaufender Scheiben 95, 96 abgedeckt. Einstrahlseitig ist in das evakuierte Glasrohr
93 ein als Sammellinse wirkender Linsenkörper 101
aus Kunststoff integriert, der aus vor der Evakuierung
in das Glasrohr eingegossenem und danach ausgehärtetem
Kunststoffmaterial besteht.

842247                                                          -24-

Anmelder: Kunert, Heinz, Dr.

Am Krieler Dom 23

DE-5000 Köln 41

Patentansprüche:
================

1.  Bauelement, insbesondere plattenförmiges Wandelement, mit einer eine vorbestimmte Dicke und einen
vorbestimmten Wärmedämmwert aufweisenden Dämmschicht,
dadurch gekennzeichnet,
daß sich wenigstens ein für den Bereich des Solarspektrums transparentes Einstrahlfenster (15, 26,
40, 47, 47', 62,62'; 70; 82, 90,; 82', 92, 100) durch
das Element hindurcherstreckt.

2.  Bauelement nach Anspruch 1, dadurch gekennzeichnet,
daß das Einstrahlfenster ein sich im wesentlichen
senkrecht zu der nach außen zur Einstrahlseite hinweisenden Oberfläche des Elements erstreckender und
dieses durchbrechender Kanal (15, 26, 40, 47, 47';
62, 62', 70; 82, 90; 82', 92, 100) ist.

3.  Bauelement nach Anspruch 1 oder 2, dadurch gekennzeichnet, daß die Oberflächen des sich durch das
Element hindurcherstreckenden Einstrahlfensters (15,
26, 40, 47, 47'; 62, 62', 70; 82, 90; 82', 92, 100)
reflektierend ausgebildet bzw. mit einem reflektierenden Material belegt sind.

4. Bauelement nach einem der Ansprüche 1 bis 3, dadurch gekennzeichnet, daß das Einstrahlfenster (15, 26,40, 47, 47'; 62, 62', 70; 82, 90, 82',92, 100) mit unterschiedlichen Querschnitten auf beiden Elementseiten ausmündet.

5. Bauelement nach Anspruch 4, dadurch gekennzeichnet, daß die größeren Querschnitt aufweisende Ausmündung des Einstrahlfensters (15, 26, 40, 47, 47'; 62, 62', 70; 82, 90, 82', 92, 100) während der Heizperiode nach außen weist und mithin der solaren Strahlungsquelle zugewandt ist.

6. Bauelement nach einem der Ansprüche 1 bis 5, dadurch gekennzeichnet, daß auf der nach außen, zur Einstrahlseite hinweisenden Elementseite eine das Einstrahlfenster überdeckende Scheibe (14, 30, 52, 65, 65', 85, 85', 90) aus transparentem Material angeordnet ist.

7. Bauelement nach Anspruch 6, dadurch gekennzeichnet, daß die auf der Einstrahlseite des Elements angeordnete Scheibe (14, 30, 52, 65, 65', 85, 85', 90) innenseitig mit einer selektiv im fernen IR-Bereich reflektierenden Beschichtung versehen ist.

8. Bauelement nach einem der Ansprüche 1 bis 6, dadurch gekennzeichnet, daß sich quer durch den Querschnitt des Einstrahlfensters (15, 26, 40, 47, 47'; 62, 62', 70; 82, 90; 82', 92, 100) wenigstens eine selektiv im fernen IR-Bereich reflektierende Schicht hindurcherstreckt.

9. Bauelement nach einem der Ansprüche 1 bis 8, dadurch gekennzeichnet, daß das Einstrahlfenster (15, 26, 40, 47, 47', 62, 62', 70; 82, 90, 82',92,100) auf der nach außen zur Einstrahlseite hinweisenden Elementseite mit einem einfallende Solarstrahlung verdichtenden Eingangselement versehen ist.

10. Bauelement nach Anspruch 9, dadurch gekennzeichnet, daß das strahlenverdichtende Eingangselement eine sich von der Außenseite (Einstrahlseite) zu einem Öffnungsfeld (19) des Einstrahlfensters verengende Strahlenkonzentrationskammer (16) ist.

11. Bauelement nach Anspruch 10, dadurch gekennzeichnet, daß sich an das Öffnungsfeld (19) ein auf der von der Einstrahlseite des Elements abgewandten Seite ausmündender Strahlenleitkanal (15) anschließt.

12. Bauelement nach einem der Ansprüche 9 bis 11, dadurch gekennzeichnet, daß das strahlenverdichtende Eingangselement ein Linsensystem (18) ist, dessen Brennpunkt im Eintrittsfeld (19) des Einstrahlfensters (15) bzw. in letzterem liegt.

13. Bauelement nach Anspruch 12, dadurch gekennzeichnet, daß es sich bei dem das Eingangselement bildenden Linsensystem um eine Fresnel-Linse (18) handelt.

14. Bauelement nach Anspruch 13, dadurch gekennzeichnet, daß die Fresnel-Linse (18) als dünnwandige Scheibe ausgebildet und mit der Unterseite der einstrahlseitig das Einstrahlfenster (15) abdeckenden Scheibe (14) verklebt ist.

-27-

15. Bauelement nach Anspruch 12, dadurch gekennzeichnet, daß es sich bei dem das Eingangselement bildenden Linsensystem um eine holographische Linse handelt.

16. Bauelement nach einem der Ansprüche 10 bis 15, dadurch gekennzeichnet, daß die Wandflächen der sich von einer Elementaußenseite zu einem Öffnungsfeld (19) des Einstrahlfensters verengenden Strahlenkonzentrationskammer (16) mit einer solare Einstrahlung absorbierenden Schicht belegt sind.

17. Bauelement nach einem der Ansprüche 9 bis 11, dadurch gekennzeichnet, daß das strahlenverdichtende Eingangselement ein nicht fokussierender parabolischer Konzentrator (27) mit einer Strahlenleitkammer (28) solcher geometrischer Gestaltung ist, daß der Winkelbereich, in dem einfallende Solarstrahlung eine Konzentration auf das Öffnungsfeld (31) des Einstrahlfensters (26) erfahren, limitiert ist.

18. Bauelement nach Anspruch 17, dadurch gekennzeichnet, daß die Geometrie der parabolischen Strahlenleitkammer (28) so ausgelegt ist, daß unter Maximierung des Konzentrationswertes die -in den Sommermonatenunter einem Höhenwinkel zwischen etwa 55° und 70° einfallende Solarstrahlung zu keiner Konzentration auf das Eintrittsfeld (31) des Einstrahlfensters (26) führt.

19. Bauelement nach einem der Ansprüche 9 bis 11, dadurch gekennzeichnet, daß das strahlenverdichtende Eingangselement ein hyperbolisches Konvex-Spiegelsystem (35) mit fokussierender Wirkung ist, bei dem um das Öffnungsfeld (39) des Einstrahlfensters (40) herum auf einen Brennpunkt ausgerichtete Spiegelflächen (36) und im Brennpunkt dieser Spiegelflächen eine auf das genannte Öffnungsfeld ausgerichtete Spiegelfläche (37) angeordnet sind, wobei der Brennpunkt der Spiegelfläche (36) etwa im Bereich der Unterseite der das Einstrahlfenster einstrahlseitig überdeckenden Scheibe aus transparentem Material liegt.

20. Bauelement nach Anspruch 19, dadurch gekennzeichnet, daß die sich um das Öffnungsfeld (39) des Einstrahlfensters (40) herumerstreckenden Spiegelflächen (36) und die in deren Brennpunkt liegende Spiegelfläche (37) in einem Profilkörper (38) angeordnet sind.

21. Bauelement nach einem der Ansprüche 1 bis 20, dadurch gekennzeichnet, daß im Einstrahlfenster (15, 26, 40, 47, 47', 62, 62', 70, 82, 90; 82', 92, 100) sich ein dessen Querschnitt ausfüllendes Solarstrahlungsventil (20, 32, 42, 49,49', 63, 63'; 83, 83', 93) erstreckt, das für einfallende Solarstrahlung transparent ist, hingegen für langwellige Wärmestrahlung sperrend wirkt.

22. Bauelement nach Anspruch 21, dadurch gekennzeichnet, daß das Solarstrahlungsventil ein der Querschnittsform des sich durch das Element hindurcherstreckenden Einstrahlfensters angepaßter hochevakuierter Glaskörper (20, 32, 42, 49, 49'; 63, 63', 83, 83', 93) ist.

23. Bauelement nach Anspruch 22, dadurch gekennzeichnet, daß der Glaskörper (63, 63', 83, 83',93)
eine einstrahlseitig angeordnete Strahlenkonzentrationskammer des Einstrahlfensters (62,62', 82, 90, 82',
100) ausfüllt.

24. Bauelement nach Anspruch 23, dadurch gekennzeichnet, daß auf der Einstrahlseite innerhalb des
Glaskörpers (93) eine Sammellinse (10) als einfallende
Solarstrahlung verdichtendes Element angeordnet ist.

25. Bauelement nach Anspruch 24, dadurch gekennzeichnet,
daß es sich bei der Sammellinse (101) um eine durch
Einbringen flüssigen Kunststoffs in den Glaskörper (93)
und Aushärten der Kunststoffmasse erzeugte Kunststofflinse handelt.

26. Bauelement nach Anspruch 22, dadurch gekennzeichnet, daß der Glaskörper (20, 32, 42, 49) sich
in der Nähe des Öffnungsfeldes (19, 31, 39, 48) zwischen
einer einstrahlseitig angeordneten Strahlenkonzentrationskammer und einem auf der von der Einstrahlseite abgewandten Seite des Elements ausmündenden Strahlenleitkanal quer durch das Einstrahlfenster hindurch erstreckt.

27. Bauelement nach einem der Ansprüche 22 bis 26,
dadurch gekennzeichnet, daß bei einer kreisförmigen
oder auch quadratischen Querschnittsform des Einstrahlfensters (15) der das Solarstrahlungsventil bildende
Glaskörper (20) ein evakuierter Hohlkörper ist, insbesondere ein kugelförmiger oder ovaler Hohlkörper.

0133989

28. Bauelement nach einem der Ansprüche 22 bis 26, dadurch gekennzeichnet, daß bei einer spaltförmigen Gestaltung des Einstrahlfensters der das Solarstrahlungsventil bildende Glaskörper eine evakuierte Röhre (49, 49') ist.

29. Bauelement nach Anspruch 27 oder 28, dadurch gekennzeichnet, daß der Glaskörper (20, 32, 42, 49') um eine etwa parallel zur Elementaußenfläche verlaufende Achse drehbar im Einstrahlfenster (15, 26, 40, 47, 47') aufgenommen und über einen Teil seines Umfanges im Umkreis eines Öffnungsfeldes des Einstrahlfensters mit einer im solaren Spektralbereich reflektierenden, wahlweise infolge Drehung des Glaskörpers auf der Strahleneintritts- oder -austrittsseite positionierbaren Beschichtung versehen ist.

30. Bauelement nach Anspruch 28 oder 29, dadurch gekennzeichnet, daß auf der von der Einstrahlseite entfernten Seite des das Solarstrahlungsventil bildenden Glaskörpers (49) sich ein im Bereich des solaren Spektrums transparentes, ein absorbierendes Fluid aufnehmendes bzw. leitendes Rohr (51) durch den das Einstrahlfenster bildenden spaltförmigen Kanal hindurcherstreckt.

31. Bauelement nach Anspruch 30, dadurch gekennzeichnet, daß in dem das Einstrahlfenster bildenden Kanal (47') rauminnenseitig von dem das Fluid aufnehmenden Rohr (51) ein fixes Dämmelement (49'), etwa in Form eines hochevakuierten, dünnwandigen Glaszylinders, angeordnet ist.

-31-

32. Bauelement nach einem der Ansprüche 1 bis 31, dadurch gekennzeichnet, daß auf der von der Einstrahlseite entfernten Elementseite eine das Einstrahlfenster überdeckende Abdeckplatte (22, 33, 43, 45, 53, 66, 66', 86, 86',96)aus transparentem Material angeordnet ist, etwa in der Form einer lichtstreuenden Scheibe (21, 53) aus Glas oder Kunststoff.

33. Bauelement nach einem der Ansprüche 1 bis 31, dadurch gekennzeichnet, daß auf der von der Einstrahlseite entfernten Elementseite eine das Einstrahlfenster überdeckende Absorptionsschicht (33, 43, 45, 66, 66', 86, 86',96) angeordnet ist.

34. Bauelement nach Anspruch 33, dadurch gekennzeichnet, daß die das Einstrahlfenster auf der von der Einstrahlseite entfernten Seite überdeckende Asorptionsschicht (33, 43, 45, 66, 66', 86, 86', 96) eine Scheibe mit einer "Low- Emissiv"-Schicht auf der Innenseite ist.

35. Bauelement nach einem der Ansprüche 1 bis 34, dadurch gekennzeichnet, daß bei flächenhafter Ausbildung des Elements sich durch dieses über die Flächenausdehnung verteilt und jeweils im Abstand voneinander angeordnete Einstrahlfenster (15, 26, 40, 47, 47', 62,62', 70; 82, 90; 82', 92,100) hindurcherstrecken.

36. Bauelement nach einem der Ansprüche 1 bis 35, gekennzeichnet durch die Ausbildung als transludentes Element mit einer Dämmschicht (61,61', 81, 81'. 91) aus transluzentem Kunststoffmaterial, etwa in Form von Schaummaterial auf der Basis Acryglas.

0133989

Fig. 1

Fig. 2

Fig. 3

Fig. 4

Fig. 5

Fig. 7

Fig. 6

60

Fig. 9

Fig. 8

80

Fig. 10